# FASCICULE DE BREVET EUROPEEN

(11) **EP 0 543 754 B1**
(45) Date de publication et mention de la délivrance du brevet: **03.01.1996**
(21) Numéro de dépôt: 92420431.6
(22) Date de dépôt: 20.11.1992
(51) Int. Cl.: F16H 1/32

(54) **Réducteur de vitesse du type cycloidal pour robots et autres manipulateurs industriels**
Zykloid-Reduktionsgetriebe für Roboter und andere Handhabungsgeräte
Cycloidal reduction gearing for robots and industrial manipulators

(30) Priorité: 21.11.1991 FR 9114609
(43) Date de publication de la demande: 26.05.1993
(73) Titulaire: S.A. DES ETABLISSEMENTS STAUBLI (France), F-74210 Faverges (FR)
(72) Inventeur: Palau, Joseph, F-74410 Duingt (FR)
(74) Mandataire: Monnier, Guy

(56) Documents cités:
- EP-A- 0 086 393
- EP-A- 0 180 748
- EP-A- 0 300 108
- EP-A- 0 429 758
- EP-A- 0 470 741
- EP-A- 0 474 897
- DE-A- 2 830 909
- FR-A- 1 359 792
- GB-A- 1 145 266
- GB-A- 1 462 372
- PATENT ABSTRACTS OF JAPAN vol. 11, no. 272 (M-622)(2719) 4 Septembre 1987 & JP-A-62 075 152 (TOSHIBA) 7 Avril 1987

## Description

La présente invention a trait aux réducteurs de vitesse destinés à assurer l'actionnement angulaire des organes mobiles des robots, manipulateurs industriels, plateaux rotatifs d'usinage et autres applications analogues

On sait que dans ce type d'appareils, il est prévu pour chaque organe mobile une chaîne cinématique comprenant un arbre d'entrée entraîné par un moteur autonome et réuni, à travers un réducteur de vitesse, à un arbre de sortie solidaire de l'organe mobile considéré. Comme la vitesse de rotation de l'arbre d'entrée est très supérieure à celle désirée pour l'arbre de sortie, on a ordinairement recours à des réducteurs du type cycloïdal.

On rappellera qu'un réducteur cycloïdal classique comprend en principe au moins un excentrique (en fait, on a le plus souvent recours à deux excentriques opposés afin d'obtenir un meilleur équilibrage des efforts) qui est lié à l'arbre d'entrée en vue d'assurer par rotation la commande d'une came circulaire dont la périphérie est prévue dentée afin de coopérer avec une denture fixe, le nombre des dents de cette denture fixe étant très légèrement supérieur (en pratique d'une unité) à celui de la périphérie de la came. A cette dernière est en outre associé au moins un doigt d'actionnement qui est porté par un plateau lié angulairement à l'arbre de sortie et qui est engagé à l'intérieur d'un logement ménagé dans la came (ou, dans le cas ordinaire de deux cames parallèles, dans un logement défini par deux ouvertures conjuguées des deux cames).

On comprend que le mouvement primaire appliqué par l'arbre d'entrée à l'excentrique oblige la came dentée correspondante à rouler sur la denture extérieure fixe et à assurer ainsi, à travers les doigts d'actionnement, l'entraînement de l'arbre de sortie suivant un rapport qui dépend du nombre de dents de ladite came et de la différence de ce nombre par rapport à celui de ladite denture fixe, ladite came reculant de cette différence pour un tour de l'excentrique. Le document FR-A-1 359 792 (FICHTEL ET SACHS) illustre bien ce type de réducteur de vitesse.

On conçoit sans peine que pour que le fonctionnement correct d'un tel système de réduction cycloïdal soit satisfaisant, il est indispensable que toutes les pièces du mécanisme fassent l'objet d'un usinage très précis complété par une finition soignée ou un appairage des éléments au montage, ce qui augmente évidemment de manière très sensible le prix de revient de l'ensemble du réducteur de vitesse.

C'est à ces inconvénients qu'entend remédier la présente invention, laquelle a pour objet le réducteur de vitesse qui est défini à la revendication 1. En fait l'invention consiste à constituer chaque doigt d'actionnement par un organe cylindrique qui dispose sur son support d'un jeu notable, propre à permettre, lors de l'assemblage, l'auto-centrage dudit organe dans l'ouverture ou logement de la came dentée correspondante.

Le dessin annexé, donné à titre d'exemple, permettra de mieux comprendre l'invention, les caractéristiques qu'elle présente et les avantages qu'elle est susceptible de procurer :
Fig. 1 est une coupe axiale montrant l'agencement général d'un réducteur cycloïdal du type de ceux utilisés à ce jour dans l'industrie des robots ou manipulateurs.
Fig. 2 est une coupe de détail à plus grande échelle illustrant la structure originale suivant l'invention.
Fig. 3 est la coupe suivant le plan indiqué en III-III en fig. 2.

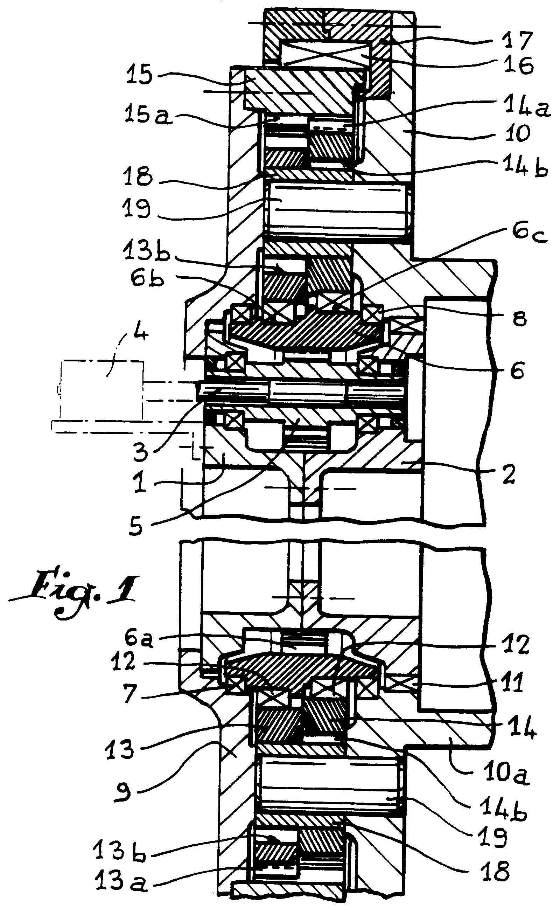

Le bâti fixe du réducteur de vitesse représenté en fig. 1 est constitué par l'assemblage de deux pièces 1 et 2 à profil annulaire. Ce bâti 1-2 supporte un arbre d'entrée 3 qui est entraîné en rotation par un moteur schématisé en 4 et sur lequel est calé un pignon 5. Ce dernier engrène avec la denture intérieure 6a d'une bague 6, disposée coaxialement autour du bâti 1-2 en étant supportée par deux roulements 7 et 8 respectivement montés le premier dans un couvercle fixe 9 solidaire du bâti 1-2, le second dans un plateau tournant 10. Ce plateau 10 est porté par le bâti 1-2 à l'aide d'un roulement 11 et il est pourvu, à l'opposé du plateau fixe 9, d'une bride annulaire 10a formant arbre de sortie pour le réducteur.

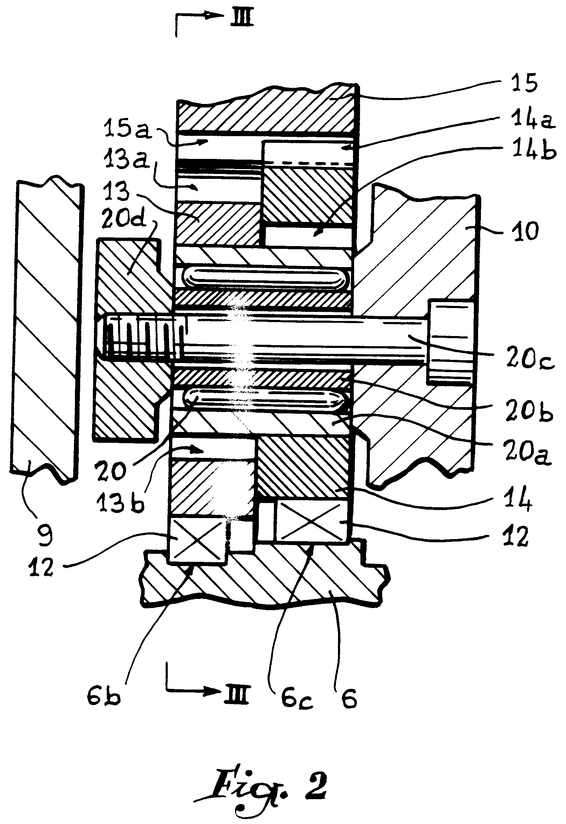

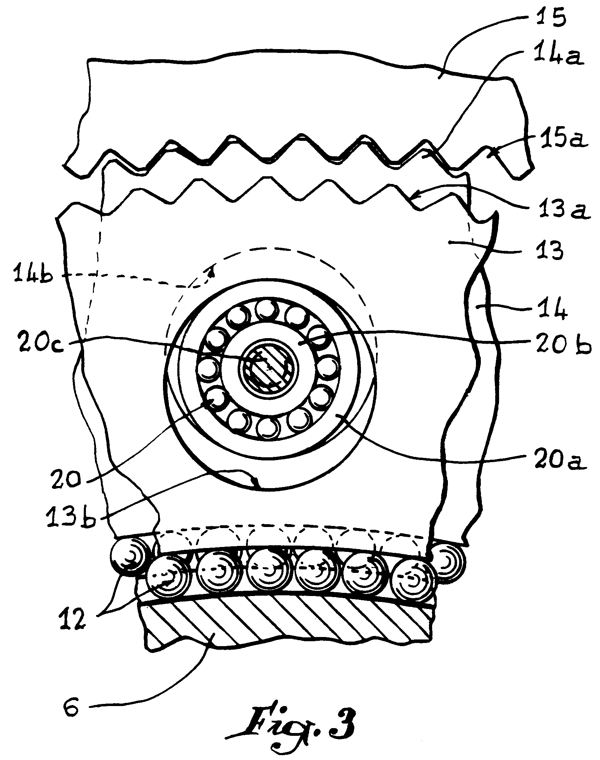

La paroi extérieure de la bague 6 est usinée pour présenter deux portées annulaires excentrées 6b et 6c, les excentrations étant disposées à l'opposé l'une de l'autre. Sur chacune de ces portées est montée, avec interposition d'un roulement 12, une came 13, respectivement 14, qui est établie à un profil annulaire et dont la périphérie est prévue dentée de façon à coopérer avec la denture intérieure d'une couronne fixe 15. Comme cela ressort des fig. 2 et 3 sur lesquelles on a affecté les références 15a, 13a et 14a aux dentures respectives de la couronne fixe 15 et de chacune des cames 13 et 14, la denture 15a comporte un nombre de dents très légèrement supérieur (en fait d'une ou de deux unités) à celui des dentures 13a et 14a des cames 13 et 14, ces dernières étant à cet effet établies à un diamètre primitif légèrement inférieur au diamètre primitif de la paroi intérieure de ladite couronne 15.

Afin d'assurer un guidage convenable du plateau tournant 10 sur les parties fixes de l'ensemble, le bord extérieur dudit plateau est prévu débordant par rapport à la couronne 15 solidaire du couvercle 9 et il reçoit un roulement 16 maintenu en place à l'aide d'un couvercle annulaire 17.

Chacune des cames dentées 13 et 14 est percée d'une série d'ouvertures circulaires (référencées 13b, 14b en fig. 2 et 3). Une fois les ouvertures des deux cames amenées en coïncidence les unes par rapport aux autres, on a introduit dans chacun des logements ainsi définis un doigt d'actionnement constitué, dans la construction classique illustrée en fig. 1, par une douille 18 montée, à jeu aussi réduit que possible, sur un support cylindrique ou axe 19, lequel est porté par le plateau 10.

Ainsi qu'on l'a indiqué au début des présentes, le fonctionnement correct d'un tel système implique le recours à des pièces qui exigent non seulement un usinage extrêmement précis, mais encore une rectification très poussée. Par ailleurs, il est pratiquement impossible de faire en sorte que le couple soit simultanément transmis par plusieurs doigts 18-19, ce qui oblige à conférer à ceux-ci un fort diamètre et conduit à augmenter ainsi les dimensions du dispositif.

Suivant l'invention et comme illustré en fig. 2 et 3, chaque doigt d'actionnement est constitué par un roulement 20 dont les organes roulants sont maintenus entre une bague extérieure 20a introduite pratiquement sans jeu dans le logement correspondant 13b-14b, et une bague intérieure 20b qui à l'inverse, dispose d'un jeu notable sur son axe-support ou vis 20c, rendu solidaire du plateau tournant 10 par blocage de ladite vis 20c dans un écrou 20d.

On conçoit que les doigts 20 ainsi réalisés remplissent une fonction identique à celle des doigts 18-19 de la construction classique, à savoir transmettre au plateau tournant 10 qui les porte le déplacement angulaire à vitesse très réduite résultant de la coopération des dentures 13a et 14a avec la denture fixe 15a sous l'effet de la rotation, à vitesse relativement rapide, des portées ou excentriques 6b et 6c de la bague tournante 6.

Néanmoins, alors que le système usuel suivant fig. 1 se comporte de manière rigide, la structure originale des doigts 20 suivant l'invention permet à ceux-ci de s'auto-centrer dans les logements 13b-14b lors de l'assemblage ; ce phénomène d'auto-centrage autorise l'emploi de pièces ne comportant qu'une précision d'usinage modérée, en même temps qu'il assure la transmission simultanée du couple de sortie à travers plusieurs doigts d'actionnement. On obtient ainsi un abaissement sensible du coût de la fabrication, et une réduction de l'encombrement du dispositif.

On comprend que le nombre des doigts d'actionnement 20 comme celui des cames 13 et 14, peut varier suivant les applications envisagées.

## Revendications

1. Réducteur de vitesse du type cycloïdal pour robots et autres manipulateurs industriels, comprenant d'une part au moins un excentrique (6b, 6c) lié à l'arbre d'entrée (3) pour assurer par rotation la commande d'une came correspondante (13, 14) pourvue à sa périphérie d'une denture (13a, 14a) qui coopère avec une denture fixe (15a) dont le nombre de dents est légèrement supérieur à celui de la denture périphérique de la came, d'autre part au moins un doigt d'actionnement (20) engagé dans un logement (13b, 14b) de la came précitée et porté par un plateau tournant de sortie (10), caractérisé en ce que le doigt d'actionnement est constitué par un organe cylindrique (20b) qui dispose, par rapport au plateau de sortie (10), sur son support (20c) d'un jeu notable, propre à permettre, lors de l'assemblage, l'auto-centrage dudit organe dans son logement préalablement à sa solidarisation définitive avec le plateau (10) précité.

2. Réducteur de vitesse suivant la revendication 1, caractérisé en ce que l'organe cylindrique est constitué par la bague extérieure (20a) d'un roulement (20) dont la bague intérieure (20b) est montée avec jeu sur un axe-support (20c).

## Patentansprüche

1. Zykloid-Geschwindigkeitsreduktionsgetriebe für Roboter und andere industrielle Handhabungsgeräte, umfassend einerseits wenigstens einen Exzenter (6b, 6c), mit der Eingangswelle (3) verbunden, um durch Rotation den Antrieb einer entsprechenden Kurvenscheibe (13, 14) sicherzustellen, an ihrem Umfang mit einer Verzahnung (13a, 14a) versehen, die zusammenwirkt mit einer ortsfesten Verzahnung (15a), deren Zähnezahl etwas größer ist als die der Umfangsverzahnung der Kurvenscheibe, und andrerseits wenigstens einen Antriebsfinger (20), der in einer Aufnahme (13b, 14b) der besagten Kurvenscheibe sitzt und getragen wird durch eine Ausgangs-Drehplatte (10)
**dadurch gekennzeichnet,**
daß der Antriebsfinger gebildet wird durch ein zylindrisches Element (20b), das bezüglich der Ausgangsplatte (10) über ein beträchtliches Spiel auf seinem Träger (20c) verfügt, das beim Zusammenbau die Selbstzentrierung von besagtem Element in seiner Aufnahme ermöglicht, vor seiner endgültigen Befestigung an der genannten Platte (10).

2. Geschwindigkeitsreduktionsgetriebe nach Anspruch 1, dadurch gekennzeichnet, daß das zylindrische Element gebildet wird durch den Außenring (20a) eines Wälzlagers (20), dessen Innenring (20b) mit Spiel auf eine Trägerachse (20c) montiert ist.

## Claims

1. A speed-reducer of the cycloidal type for robots and other industrial manipulators, comprising firstly at least one eccentric (6b, 6c) connected to the input shaft (3) to ensure by rotation the control of a corresponding cam (13, 14) provided on its periphery with a set of teeth (13a, 14a) which cooperates with a set of fixed teeth (15a), the number of teeth of which is slightly greater than that of the peripheral set of teeth of the cam, and secondly at least one actuating finger (20) engaged in a receptacle (13b, 14b) of the afore-mentioned cam and borne by a rotating output plate (10), characterised in that the actuating finger is formed by a cylindrical member (20b) which has, relative to the output plate (10), a significant amount of play on its support (20c), suitable to permit, during assembly, the self-centring of said member in its receptacle prior to the definitive coupling thereof to the afore-mentioned plate (10).

2. A speed-reducer according to Claim 1, characterised in that the cylindrical member is formed by the outer ring (20a) of a bearing (20), the inner ring (20b) of which is mounted with play on a supporting spindle (20c).
